# EUROPÄISCHE PATENTSCHRIFT

(11) **EP 0 676 162 B1**
(45) Veröffentlichungstag und Bekanntmachung des Hinweises auf die Patenterteilung: **20.10.1999**
(21) Anmeldenummer: 94810200.9
(22) Anmeldetag: 11.04.1994
(51) Int. Cl.: A47J 31/42, A47J 42/50

(54) **Kaffeemaschine mit einer Mahleinrichtung**
Coffee machine with a grinding device
Machine à café pourvue d'un système de broyage

(43) Veröffentlichungstag der Anmeldung: 11.10.1995
(73) Patentinhaber: M. Schaerer AG, 3302 Moosseedorf (CH)
(72) Erfinder: Lüssi, André, CH-3303 Jegenstorf (CH)
(74) Vertreter: Fischer, Franz Josef

(56) Entgegenhaltungen:
- WO-A-87/01570
- DE-A- 2 214 022
- DE-A- 2 641 539

## Beschreibung

Die vorliegende Erfindung betrifft eine Kaffeemaschine mit einer Mahleinrichtung gemäss dem Oberbegriff des Patentanspruches 1.

Bei Kaffeemaschinen der obengenannten Art wird jeweils vor dem Zubereiten von einer oder gleichzeitig zwei Tassen Kaffee, das dazu benötigte Kaffeepulver in der Mahleinrichtung gemahlen. Dazu wird entweder ab dem Kaffeebohnenbehälter eine fest vorgegebene Menge von Kaffeebohnen an eine Aufnahmeöffnung des Mahlwerkes abgegeben oder die Aufnahmeöffnung des Mahlwerkes steht ständig offen, so dass im Mahlwerk dauernd ein Kaffeebohnenvorrat vorhanden ist, wobei im letzten Fall die benötigte Kaffeepulvermenge durch die Einschaltdauer des Mahlwerkes bestimmt wird.

Gemeinsam bei all diesen Kaffeemaschinen ist das laute heulende Geräusch, das während dem Mahlvorgang der Kaffeebohnen durch die Mahleinrichtung erzeugt wird. Besonders auffällig und störend tritt dieses laute Geräusch bei Haushaltkaffeemaschinen auf. Diese Nachteile weist auch die in der DE-B-26 41 539 dargestellte Kaffeemaschine auf.

In der Kaffeemaschine, wie sie in der DE-A-22 14 022 dargestellt ist, bilden Mahlwerk, Motor und Einfülltrichter eine Einheit. Diese ist über Dämpfungselemente mit dem Gehäuse verbunden. Dadurch wird wohl eine gewisse Geräuschminderung erreicht, die aber nicht ausreichend ist.

Es ist die Aufgabe der vorliegenden Erfindung, Massnahmen zu treffen, durch die das vorgenannte laute Geräusch deutlich vermindert werden kann.

Die Lösung dieser Aufgabe erfolgt erfindungsgemäss durch die im Anspruch 1 aufgeführten Merkmale.

Untersuchungen des Problemes haben ergeben, dass, wenn man den Kaffeebohnenbehälter und das Mahlwerk, die üblicherweise mechanisch miteinander zu einer Einheit verbunden sind, voneinander trennt, die Geräuschentwicklung durch das Mahlwerk wesentlich geringer ist. Dies ist so erklärbar, dass bei einer Mahleinrichtung, bei der der Kaffeebohnenbehälter und das Mahlwerk mechanisch direkt miteinander verbunden sind, die bei einem Mahlvorgang durch das Mahlwerk erzeugten Schwingungen auf den Kaffeebohnenbehälter übertragen und durch diesen verstärkt als lautes heulendes Geräusch an die Umgebung abgegeben werden. Der Kaffeebohnenbehälter wirkt dabei als Resonator.

Lediglich durch die einfache Massnahme des Trennens der direkten mechanischen Verbindung kann die Resonatorwirkung des Kaffeebohnenbehälters verhindert werden.

Sowohl der Kaffeebohnenbehälter als auch das Mahlwerk können direkt an einem Maschinengestell, an einem die Kaffeemaschine im wesentlichen umschliessenden Gehäuse oder an beiden dieser Teile befestigt sein. Eine bevorzugte und einfache Ausführung, die auch in bezug auf die Lärmreduktion optimal ist, hat sich dadurch ergeben, dass der Kaffeebohnenbehälter direkt in ein aus Kunststoff erstelltes Gehäuse integriert ist und dass das Mahlwerk am Maschinengestell befestigt ist.

Der Kaffeebohnenbehälter, dessen Oeffnung zum Abgeben von Kaffeebohnen an das Mahlwerk vorteilhafterweise trichterförmig ausgeführt ist, liegt relativ zur Aufnahmeöffnung des Mahlwerkes derart, dass der dem Mahlwerk zugewandte Trichterrand im Bereiche der Aufnahmeöffnung liegt, wobei zwischen dem genannten Trichterrand und der Peripherie der Aufnahmeöffnung ein Ringspalt gebildet ist. Eine direkte mechanische Verbindung oder eine unmittelbare Berührung des Kaffeebohnenbehälters mit dem Mahlwerk besteht nicht. Damit durch den genannten Ringspalt nicht in unbeabsichtigter Weise Kaffeebohnen austreten können, ist dieser mit einer Schürze oder einem Ring aus einem weichen, mechanische Schwingungen dämpfenden Material, vorzugsweise aus Filz, abgedichtet.

Ueblicherweise arbeiten Mahlwerke in den genannten Kaffeemaschinen mit Mahlscheiben mit einer Umdrehungszahl von ca. 1'000 bis 2'000 Umdrehungen pro Minute. Analysen des mit solchen Mahlwerken erzeugten Mahlgeräusches haben ergeben, dass dieses eine Grundschwingung aufweist, die im Bereich von ca. 2'000 bis 4'000 Hz liegt, also in einem Bereich, in dem das menschliche Ohr am empfindlichsten ist. Durch die dieser Grundschwingung überlagerten Oberwellen kommt das für den Menschen überaus störende kreischende oder heulende Geräusch zustande. Versuche haben ergeben, dass, wenn das Mahlwerk mit einer niedrigeren Drehzahl, beispielsweise lediglich mit 500 U/min betrieben wird, die beim Mahlen von Kaffeebohnen erzeugte Grundschwingung des Mahlgeräusches in einen Bereich von 500 bis 1'000 Hz zu liegen kommt. Ebenfalls die Oberwellen liegen bei dem mit reduzierter Drehzahl betriebenen Mahlwerk in einem tieferen Frequenzbereich. Für das menschliche Ohr entsteht ein Mahlgeräusch, das als wesentlich angenehmer und vor allem als weniger laut empfunden wird. Demzufolge kann mit einem Mahlwerk, das im Bereich der oben genannten reduzierten Drehzahl arbeitet, ein Beitrag zu einer subjektiv empfundenen Verminderung des Mahlgeräusches geleistet werden.

Damit eine geforderte Mahlleistung mit einem Mahlwerk, das mit einer reduzierten Drehzahl betrieben wird, aufrechterhalten werden kann, sind bestimmte Massnahmen erforderlich. Bei der vorliegenden Erfindung hat man die geforderte Mahlleistung dadurch aufrechterhalten, indem man die scheiben-und ringförmigen Mahlscheiben, die im Mahlwerk angeordnet sind, vergrössert hat. Jede der Mahlscheiben weist eine verzahnte Stirnseite auf, wobei die Stirnseiten der beiden Mahlscheiben einander zugewandt sind. Die aktive Mahlfläche liegt zwischen den beiden genannten Stirnseiten. Der innere und der äussere Durchmesser von jeder der Scheiben ist nun so gewählt worden, dass gegenüber herkömmlichen Mahlwerken eine deutliche Vergrösserung der Mahlfläche stattgefunden hat.

Ein weiterer Vorteil, der durch die Reduktion der Drehzahl und durch die Vergrösserung der aktiven Mahlfläche erreicht werden konnte, ist eine kleinere Hitzeentwicklung beim Mahlen der Kaffeebohnen. Dadurch können örtliche Ueberhitzungen oder Verbrennungen am Kaffee verhindert werden, wodurch der Geschmack des erzeugten Kaffees verbessert wird.

Das Mahlwerk weist einen ringförmigen Abschlussteil auf, an dem die eine Mahlscheibe mechanisch befestigt ist. Im Abschlussteil ist die Aufnahmeöffnung zum Zuführen der Kaffeebohnen an das Mahlwerk enthalten. Der Abschlussteil ist vorzugsweise über ein Schneckengetriebe in achsialer Richtung zum Mahlwerk und zur anderen, drehbar angetriebenen Mahlscheibe zum Einstellen der Korngrösse des Kaffeepulvers verschiebbar.

Ein bevorzugtes Ausführungsbeispiel der vorliegenden Erfindung ist nachfolgend anhand von Figuren beschrieben. Es zeigen
**Fig. 1** einen Teilschnitt durch eine Kaffeemaschine, wobei im Teilschnitt eine Mahleinrichtung, welche im wesentlichen einen Kaffeebohnenbehälter und ein Mahlwerk umfasst, und ein Teil einer Brüheinrichtung sichtbar sind und
**Fig. 2** eine Explosionszeichnung des Mahlwerkes.

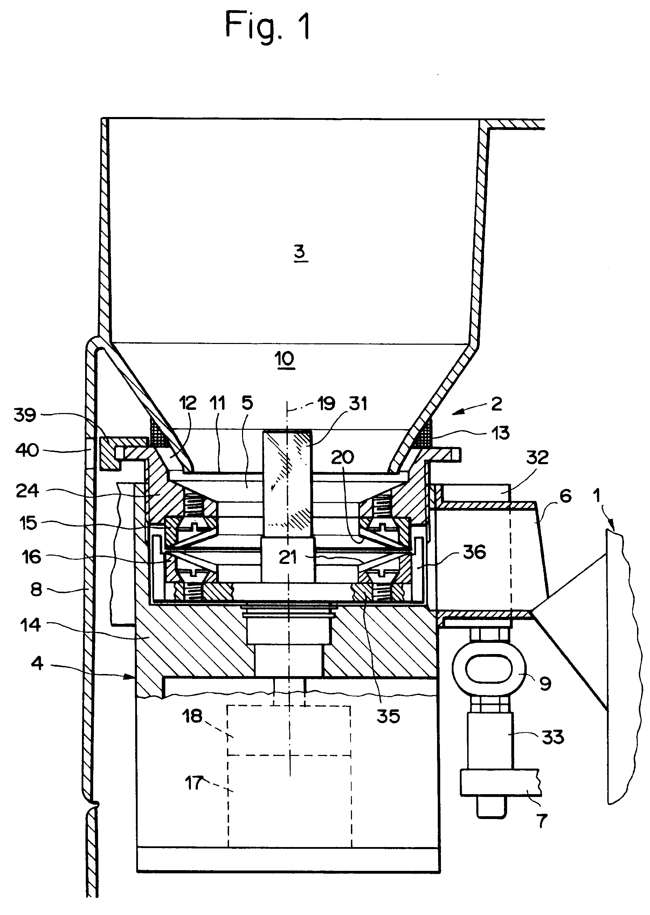

In der Fig. 1 ist mit dem Bezugszeichen 1 lediglich symbolisch ein Teil einer Brüheinrichtung einer Kaffeemaschine dargestellt. Es ist im wesentlichen derjenige Teil mit einem Einfülltrichter gezeigt, durch welchen Kaffeepulver in eine nicht dargestellte Brühkammer der Brüheinrichtung eingefüllt werden kann. Mit 2 ist die Mahleinrichtung bezeichnet, die im wesentlichen einen Kaffeebohnenbehälter 3 und ein Mahlwerk 4 umfasst. Der Kaffeebohnenbehälter 3 weist einen Abgabetrichter 10 auf, der zum Abgeben von Kaffeebohnen an das Mahlwerk 4 bestimmt ist. Ein dem Mahlwerk 4 zugewandter Trichterrand 11 des Kaffeebohnenbehälters 3 liegt dabei in einem Bereich einer ersten Oeffnung 5 des Mahlwerkes 4, welche zum Aufnehmen der vom Trichter 10 abgegebenen Kaffeebohnen bestimmt ist. Im Mahlwerk sind zwei Mahlscheiben 15, 16 vorhanden, die scheiben- und kreisringförmig ausgeführt sind. Je eine Stirnseite 20, 21 der beiden Mahlscheiben 15, 16 ist verzahnt. Die beiden genannten Stirnseiten sind einander zugewandt und bilden die aktive Mahlfläche. Da die genannten Stirnseiten 20, 21 zu einer gedachten Ebene rechtwinklig zu einer Drehachse 19 schräg ausgeführt sind, derart, dass die beiden Stirnseiten in radialer Richtung von einem inneren Ringrand zu einem äusseren Ringrand der Mahlscheiben 15, 16 aufeinander zugerichtet verlaufen, werden die innerhalb des inneren Ringrandes gelegenen Kaffeebohnen unter einer Mahlwirkung zwischen den beiden Stirnseiten hindurchbefördert, wobei sich der gemahlene Kaffee, das Kaffeepulver, ausserhalb der Mahlscheiben 15,16 ansammelt und über eine zweite oder Ausgangsöffnung 6 in den vorgenannten Einfülltrichter der Brüheinrichtung 1 abgegeben wird.

Das Merkmal 4 umfasst im wesentlichen eine Kaffeemühle 14, einen Elektromotor 17 sowie ein Getriebe 18, welches zwischen der Kaffeemühle und dem Elektromotor angeordnet ist. Die eine Mahlscheibe 15 ist mit einem ringförmigen Abschlussteil 24 für das dem Elektromotor 18 abgewandte Ende der Kaffeemühle 14 des Mahlwerkes 4 verbunden. Im Abschlussteil 24 ist die Aufnahmeöffnung 5 enthalten. Der Elektromotor 17 treibt über das Getriebe 18 die Drehachse 19 an, auf welcher ein Drehteller 35 mit der daran befestigten anderen Mahlscheibe 16 angeordnet ist. Das dem Elektromotor 17 abgewandte Ende der Drehachse 19 weist einen vierkantigen Bereich 31 auf und ragt in den Trichter 10 des Kaffeebohnenbehälters 3. Bei eingeschaltetem Motor 17 werden die auf dem Drehteller 35 befestigte Mahlscheibe 16 und der genannte Vierkant 31 in Rotation versetzt. Die eine, untere Mahlscheibe 16 dreht zur anderen, oberen und stillstehenden Mahlscheibe 15 mit einer relativen Drehzahl, deren Grösse weiter hinten beschrieben ist. Der Vierkant bewirkt, dass ständig Kaffeebohnen vom Kaffeebohnenbehälter 3 in den Raum innerhalb des inneren Ringrandes der Mahlscheiben 15, 16 befördert werden.

Im gezeigten Ausführungsbeispiel ist der Kaffeebohnenbehälter 3 in ein Gehäuse 8, das die Kaffeemaschine im wesentlichen umgibt und von dem nur ein Teil sichtbar ist, integriert, d.h., die Wandung des Kaffeebohnenbehälters 3 ist ein Bestandteil des vorzugsweise aus Kunststoff gefertigten Gehäuses.

Das Mahlwerk 4 ist an einem Maschinengestell 7, von dem ebenfalls nur ein Teil sichtbar ist, befestigt. Zur Schwingungsdämpfung und zur Verminderung von Schwingungsübertragungen sind zwischen Befestigungspunkten des Mahlwerkes 4 am Maschinengestell 7 Dämpfungselemente 9 aus einem elastischen Material eingefügt. Eine starre mechanische Verbindung des Mahlwerkes mit dem Maschinengestell, welche Schwingungen des Mahlwerkes leicht auf das Maschinengestell übertragen würde, ist nicht vorhanden.

Im gezeigten Ausführungsbeispiel ragt der dem Mahlwerk 4 zugewandte Rand 11 des Trichters 10 in den Bereich der ersten oder Aufnahmeöffnung 5 des Mahlwerkes 4. Zwischen dem unteren Rand 11 des Trichters sowie dem daran angrenzenden Bereich der Trichterwandung und der Peripherie der Aufnahmeöffnung 5 ist ein umlaufender Ringspalt 12 vorhanden, damit keine mechanische Schwingungsübertragung vom Mahlwerk 4 auf den Kaffeebohnenbehälter 3 erfolgen kann. Um zu verhindern, dass unbeabsichtigt Kaffeebohnen oder Kaffeebohnenstücke durch den Ringspalt 12 austreten können, ist dieser mit einem weichen schalldämmenden Material abgedichtet. Dies kann eine Schürze aus einem weichen Material oder wie im gezeigten Ausführungsbeispiel, ein Ring 13, vorzugsweise aus Filz sein.

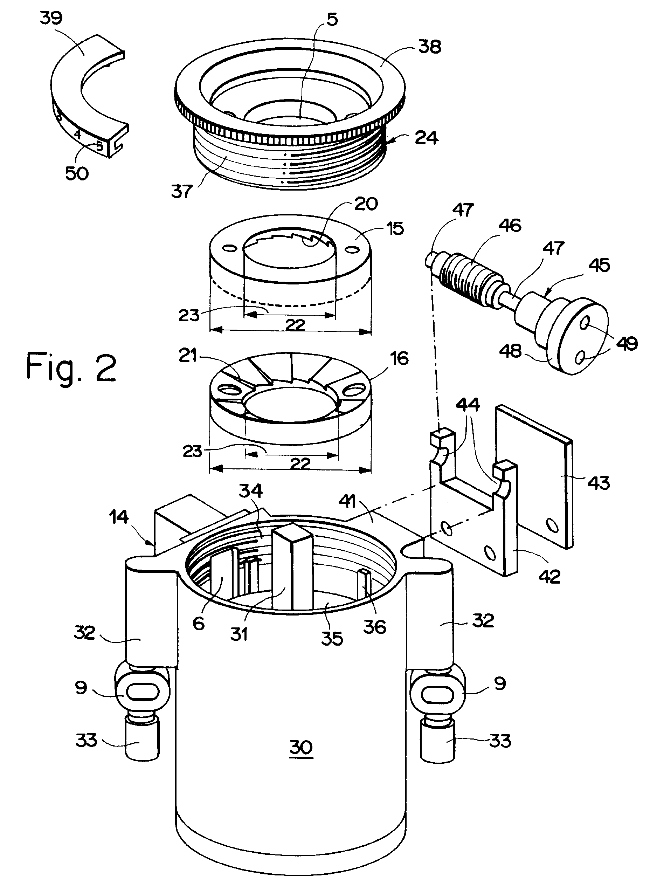

In der Fig. 2 ist das Mahlwerk in einer Explosionszeichnung dargestellt. Die bereits anlässlich der Erklärung der Fig. 1 erwähnten Teile weisen in der Fig. 2 die gleichen Bezugszeichen auf. Das Mahlwerk 4 umfasst ein Mahlwerkgehäuse 30, vorzugsweise aus Leichtmetall oder Kunststoff, wobei in einem in der Fig. 2 unten liegenden Bereich des Gehäuses der genannte, in dieser Figur nicht sichtbare Elektromotor mit dem Getriebe angeordnet ist. Im oberen Teil des Gehäuses befindet sich die eigentliche Kaffeemühle 14, auf deren Funktionsweise weiter hinten näher eingegangen wird. Am Gehäuse 30 des Mahlwerkes 4 stehen zwei Befestigungsflansche 32 in radialer Richtung ab, an welchen je eines der Dämpfungselemente 9 angeordnet ist. Im gezeigten Ausführungsbeispiel besteht jedes Dämpfungselement 9 aus einem Gummiring, dessen Mantelfläche einerseits am Befestigungsflansch 32 befestigt ist und andererseits auf der in radialer Richtung gegenüberliegenden Seite mit einem Befestigungsbolzen 33 mit einem nicht gezeichneten Innengewinde verbunden ist. Das Innengewinde ist vorgesehen, um die dem Dämpfungselement 9 abgewandte Seite des Befestigungsbolzens mit dem Maschinengestell zu verbinden. Auf der in der Fig. 2 oberen Seite des Gehäuses 30 ist der Mahlraum sichtbar, durch welchen der genannte Vierkant 31 als oberes Ende der Drehachse in axialer Richtung hindurchragt. In der Wandung des Gehäuses 30 ist die zweite Oeffnung 6 vorhanden, die zum Ausgeben des Kaffeepulvers vom Mahlraum an die Brüheinrichtung bestimmt ist. Der obere Bereich des Mahlraumes ist mit einem Einstellinnengewinde 34 versehen, welches zum Aufnehmen des ringförmigen Abschlussteiles 24, an welchem ein Einstellaussengewinde 37 angebracht ist, vorgesehen ist. Im Mahlraum ist ein Teil des Drehtellers 35, welcher den Mahlraum nach unten begrenzt, und an welchem die aus dem Mahlraum hochgehobene Mahlscheibe 16 mit ihrer nach oben ragenden verzahnten Stirnseite 21 befestigt ist, sichtbar. An der Mantelfläche des kreisförmigen Drehtellers 35 sind um den Umfang verteilt in achsialer Richtung zu den Mahlscheiben 15, 16 sich erstreckende Mitnehmer 36 angeordnet, welche dazu bestimmt sind, durch ihre längs der inneren Wandung des Mahlraumes umlaufende Bewegung das zwischen den Mahlscheiben 15, 16 austretende Kaffeepulver in die Ausgabeöffnung 6 zu befördern.

Die in der Fig. 2 obere Mahlscheibe 15 ist am ringförmigen Abschlussteil 24 befestigt, mit welchem der Mahlraum oben abgeschlossen wird, indem das Aussengewinde 37 mit dem Innengewinde 34 in Eingriff gebracht wird. Die axiale Distanz der verzahnten Stirnseiten 21, 20 der in Rotation versetzbaren Mahlscheibe 16 und der nicht in Rotation versetzbaren Mahlscheibe 15 wird durch die Einschraubtiefe des Abschlussringes 24 eingestellt. Mit der genannten achsialen Distanz wird auch die Korngrösse des gemahlenen Kaffees bestimmt. Zur Einstellung der Korngrösse weist der ringförmige Abschlussteil 24 einen in radialer Richtung nach aussen gerichteten Zahnkranz 38 auf, in welchen eine Schneckenwelle 46 eines Einstellorganes 45 eingreift. Das Einstellorgan 45 ist ein mit Absätzen versehenes wellenförmiges Gebilde, wobei die bereits genannte Schneckenwelle 46 ein sich in axialer Richtung erstreckender Teilbereich dieses Gebildes ist. Links und rechts der Schneckenwelle sind je Lagerzapfen 47 vorhanden, welche zum drehbaren Festhalten des Einstellorganes am Gehäuse 30 des Mahlwerkes dienen. Im weiteren weist eines der Enden des Einstellorganes einen Endflansch 48 auf, in welchen zwei achsial gerichtete, radial voneinander beabstandete Bohrungen zum Aufnehmen eines Einstellwerkzeuges angebracht sind. Befestigt ist das Einstellorgan 45 am Gehäuse 30 des Mahlwerkes dadurch, dass die genannten Lagerzapfen 47 in Lagerausschnitte 44 einer Einstellorganbefestigungsplatte 42 eingelegt sind, wobei die Einstellorganbefestigungsplatte mit einem in radialer Richtung aussen vom Gehäuse 30 des Mahlwerkes abstehenden Einstellorganträger verbunden ist. Eine auf der dem Gehäuse 30 abgewandten Seite der Einstellorganbefestigungsplatte 42 angebrachte Bremsplatte 43 aus einem elastischen Material, vorzugsweise aus Kunststoff, dient dazu, ein ungewolltes Drehen des Einstellorganes und damit ein ungewolltes Verstellen der Korngrösse des zu mahlenden Kaffees zu verhindern.

Das Verstellen der Korngrösse kann durch Einführen des genannten Einstellwerkzeuges durch das Gehäuse 8 hindurch in die dafür vorgesehenen Bohrungen 49 durch Drehen des Einstellorganes erfolgen. Der ringförmige Abschlussteil 24 wird dabei gegenüber dem Gehäuse 30 des Mahlwerkes gedreht. Durch diese Drehbewegung erfolgt ebenfalls eine axial zum Mahlwerk gerichtete Verschiebebewegung, welche den Abstand der beiden Mahlscheiben 15, 16 verändert.

Am Zahnkranz 38 des ringförmigen Abschlussteiles 24 ist ein Skalensegment 39 mit einer Zahlenmarkierung 50 angebracht. Die Zahlenmarkierung und somit die eingestellte Korngrösse ist über eine Ableseöffnung 40 (Fig. 1) von aussen sichtbar.

Die einander zugewandten Flächen der verzahnten Stirnseiten 20, 21 der beiden scheiben- und kreisringförmig ausgeführten Mahlscheiben 15, 16 stellen die aktive Mahlfläche dar. Um eine gewünschte Mahlleistung auch bei einer reduzierten Drehzahl des Mahlwerkes von lediglich ca. 500 U/min, höchstens jedoch 800 U/min, zu erhalten, ist vorgesehen, dass der innere Durchmesser 23 jeder Mahlscheibe 15, 16 höchstens 30 mm und der äussere Durchmesser 22 jeder Mahlscheibe 15, 16 mindestens 60 mm beträgt.

## Patentansprüche

1. Kaffeemaschine mit einer Mahleinrichtung (2), welche einen Kaffeebohnenbehälter (3) und ein Mahlwerk (4) umfasst, wobei das Mahlwerk (4) eine erste Oeffnung (5) zum Aufnehmen von Kaffeebohnen ab dem Kaffeebohnenbehälter (3) und eine zweite Oeffnung (6) zum Ausgeben von Kaffeepulver an eine Brüheinrichtung (1) aufweist, in welche zum Zubereiten des Getränkes das Kaffeepulver einbringbar und mit heissem Wasser durchsetzbar ist, und mit einem Maschinengestell (7) und/oder ein die Kaffeemaschine im wesentlichen umschliessendes Gehäuse (8), wobei das Mahlwerk (4) am Maschinengestell (7) und/oder am Gehäuse (8) über elastische Dämpfungsmittel (9) befestigt ist, dadurch gekennzeichnet, dass der Kaffeebohnenbehälter (3) und das Mahlwerk (4) mechanisch getrennt voneinander angeordnet sind und der Kaffeebohnenbehälter (3) einen der ersten Oeffnung (5) des Mahlwerks (4) zugewandten Abgabetrichter (10) aufweist, wobei ein Trichterrand (11) des Abgabetrichters (10) derart zur ersten Oeffnung (5) des Mahlwerks angeordnet ist, dass zwischen dem Trichterrand (11) und der Peripherie der ersten Oeffnung (5) ein Ringspalt (12) gebildet ist..

2. Kaffeemaschine nach Anspruch 1, dadurch gekennzeichnet, dass der Kaffeebohnenbehälter (3) in das Gehäuse (8) integriert ausgeführt ist.

3. Kaffeemaschine nach Anspruch 1 oder 2, dadurch gekennzeichnet, dass der Ringspalt (12) zum Verhindern eines Kaffeebohnenaustrittes mit einer Schürze oder einem Ring (13) aus einem weichen Material, vorzugsweise aus Filz, abgedeckt ist.

4. Kaffeemaschine nach einem der Ansprüche 1 bis 3, dadurch gekennzeichnet, dass das Mahlwerk (4) eine Kaffeemühle (14) mit darin angeordneten Mahlscheiben (15, 16) und einen Elektromotor (17) mit einem Getriebe (18) umfasst, wobei zwei einander benachbarte Mahlscheiben, zum Mahlen des Kaffees, mit einer zueinander relativen Drehzahl von höchstens 800 U/min, vorzugsweise etwa 500 U/min, antreibbar sind.

5. Kaffeemaschine nach Anspruch 4, dadurch gekennzeichnet, dass jede Mahlscheibe eine wirksame Mahlfläche aufweist, wobei die wirksamen Mahlflächen von zwei benachbarten Mahlscheiben zum Einstellen der Korngrösse des Kaffeepulvers relativ zueinander verschiebbar sind.

6. Kaffeemaschine nach Anspruch 4 oder 5, dadurch gekennzeichnet, dass zwei scheiben- und kreisringförmige Mahlscheiben (15, 16) mit je einer verzahnten Stirnseite (20, 21) vorhanden sind, wobei die Mahlscheiben (15, 16) in axialer Richtung (19) einander benachbart und die verzahnten Stirnseiten (20, 21) einander zugewandt sind, und wobei der innere Durchmesser (22) jeder Mahlscheibe höchstens 30 mm und der äussere Durchmesser (23) jeder Mahlscheibe mindestens 60 mm beträgt.

7. Kaffeemaschine nach einem der Ansprüche 4 bis 6, dadurch gekennzeichnet, dass eine der Mahlscheibe (15) mit einem ringförmigen Teil (24), der die erste Oeffnung (5) des Mahlwerkes (4) zum Aufnehmen von Kaffeebohnen umfasst, verbunden ist, wobei dieser ringförmige Teil (24) einen Abschluss des Mahlwerkes (4) bildet und zum Einstellen der Korngrösse des Kaffeepulvers in einer axialen Richtung zum Mahlwerk (4) und zur anderen Mahlscheibe (16) veschiebbar ist.

## Claims

1. Coffee machine with a grinding device (2), which comprises a coffee bean container (3) and a mill work (4), the mill work (4) having a first aperture (5) for receiving coffee beans from the coffee bean container (3) and a second aperture (6) for dispensing coffee powder to a brewing device (1), in which the coffee powder can be introduced for preparing the beverage and which can be infiltrated with hot water, and with a machine frame (7) and/or a housing (8) essentially enclosing the coffee machine, the mill work (4) being fixed to the machine frame (7) and/or to the housing (8) via elastic damping means (9), characterised in that the coffee bean container (3) and the mill work (4) are disposed mechanically separated from one another, and the coffee bean container (3) has a distribution hopper (10) turned toward the first aperture (5) of the mill work (4), a hopper edge (11) of the distribution hopper (10) being disposed with respect to the first aperture (5) of the mill work in such a way that an annular gap (12) is formed between the hopper edge (11) and the periphery of the first aperture (5).

2. Coffee machine according to claim 1, characterised in that the coffee bean container (3) is designed integrated into the housing (8).

3. Coffee machine according to claim 1 or 2, characterised in that the annular gap (12) is covered with a skirt or a ring (13) made of a soft material, preferably of felt, to prevent an exiting of coffee beans.

4. Coffee machine according to one of the claims 1 to 3, characterised in that the mill work (4) comprises a coffee mill (14) with mill discs (15, 16) disposed therein and an electromotor (17) with a gearing (18), two mill discs, adjacent to one another, for grinding the coffee, being drivable at a rotational speed relative to one another of at most 800 rpm, preferably about 500 rpm.

5. Coffee machine according to claim 4, characterised in that each mill disc has an active milling surface, the active milling surfaces of two adjacent mill discs being displaceable relative to each other to adjust the grain size of the coffee powder.

6. Coffee machine according to claim 4 or 5, characterised in that two discoid and annular mill discs (15, 16) are provided with a toothed front side (20, 21) each, the mill discs (15, 16) being adjacent to each other in axial direction (19) and the toothed front sides (20, 21) being turned toward each other, and the inner diameter (22) of each mill disc amounting to at most 30 mm and the outer diameter (23) of each mill disc amounting to at least 60 mm.

7. Coffee machine according to one of the claims 4 to 6, characterised in that one of the mill discs (15) is connected to an annular part (24) which includes the first aperture (5) of the mill work (4) for receiving coffee beans, whereby this annular part (24) forms an end of the mill work (4) and being displaceable in an axial direction to the mill work (4) and to the other mill disk (16) to adjust the grain size of the coffee powder.

## Revendications

1. Machine à café comportant un système de broyage (2) qui comprend un récipient pour café en grains (3) et un broyeur (4), le broyeur (4) présentant une première ouverture (5), destinée à recevoir des grains de café provenant du récipient pour café en grains (3), et une deuxième ouverture (6) servant à délivrer du café moulu à un dispositif de passage à l'eau bouillante (1) dans lequel, pour préparer la boisson, on peut placer le café moulu et le faire traverser par de l'eau très chaude, et comportant un bâti (7), ou une enveloppe (8) entourant pour l'essentiel la machine à café, ou les deux, le broyeur (4) étant monté sur le bâti (7), ou sur l'enveloppe (8), ou les deux, par l'intermédiaire d'organes amortisseurs élastiques (9), caractérisée en ce que le récipient pour café en grains (3) et le broyeur (4) sont séparés l'un de l'autre sur le plan mécanique et que le récipient pour café en grains (3) possède un entonnoir d'alimentation (10) dirigé vers la première ouverture (5) du broyeur (4), un bord de l'entonnoir (11) de l'entonnoir d'alimentation (10) étant placé de telle manière, par rapport à la première ouverture (5) du broyeur, que cela forme un interstice annulaire (12) entre le bord de l'entonnoir (11) et le périmètre de la première ouverture (5).

2. Machine à café selon la première revendication, caractérisée en ce que le récipient pour café en grains (3) est intégré à l'enveloppe (8).

3. Machine à café selon la revendication 1 ou 2, caractérisée en ce que, pour empêcher la sortie de grains de café, l'interstice annulaire (12) est recouvert par un tablier ou un anneau (13) fait d'une matière molle, de préférence du feutre.

4. Machine à café selon l'une des revendications 1 à 3, caractérisée en ce que le broyeur (4) comprend un moulin à café (14), à l'intérieur duquel se trouvent des disques broyeurs (15, 16), et un moteur électrique (17) avec réducteur (18), deux disques broyeurs voisins l'un de l'autre pouvant être entraînés, afin de moudre le café, à une vitesse de rotation relative, l'un par rapport à l'autre, de 800 tr/mn au maximum, de préférence environ 500 tr/mn.

5. Machine à café selon la revendication 4, caractérisée en ce que chaque disque broyeur présente une surface de broyage active, les surfaces de broyage actives de deux disques broyeurs voisins pouvant être déplacées l'une par rapport à l'autre afin de régler la grosseur de grain du café moulu.

6. Machine à café selon la revendication 4 ou 5, caracterisée en ce qu'elle possède deux disques broyeurs (15, 16) en forme de disque et d'anneau circulaire, ayant chacun une face avant dentée (20, 21), ces disques broyeurs (15, 16) étant proches l'un de l'autre dans la direction longitudinale (19) et les faces avant dentées (20, 21) étant dirigées l'une vers l'autre,et le diamètre intérieur (22) de chaque disque broyeur étant au maximum de 30 mm, son diamètre extérieur (23) d'au moins 60 mm.

7. Machine à café selon l'une des revendications 4 à 6, caractérisée en ce que l'un des disques broyeurs (15) est relié à une pièce annulaire (24) qui entoure la première ouverture (5) du broyeur (4), servant à recevoir les grains de café, cette pièce annulaire (24) constituant l'une des extrémités du broyeur (4) et pouvant être déplacée longitudinalement vers le broyeur (4) et vers l'autre disque broyeur (16) pour régler la grosseur de grain du café moulu.
